# FASCICULE DE BREVET EUROPEEN

(11) **EP 3 968 228 B1**
(45) Date de publication et mention de la délivrance du brevet: **12.07.2023**
(21) Numéro de dépôt: 21195924.2
(22) Date de dépôt: 10.09.2021
(51) Int. Cl.: G06K 19/073, G06K 19/077

(54) **DISPOSITIF D'IDENTIFICATION COMPRENANT UN MICROCIRCUIT**
IDENTIFIZIERUNGSVORRICHTUNG, DIE EINEN MIKROSCHALTKREIS UMFASST
IDENTIFICATION DEVICE COMPRISING A MICROCIRCUIT

(30) Priorité: 10.09.2020 FR 2009186
(43) Date de publication de la demande: 16.03.2022
(73) Titulaire: Idemia Identity & Security France, 92400 Courbevoie (FR)
(72) Inventeur: MERCIER, Laurent, 92400 COURBEVOIE (FR); HEURTIER, Olivier, 92400 COURBEVOIE (FR); KERAUTRET, Laurent, 92400 COURBEVOIE (FR)
(74) Mandataire: Idemia

(56) Documents cités:
- EP-A1- 3 282 396
- EP-A1- 3 690 686
- US-A1- 2014 263 624

## Description

### DOMAINE DE L'INVENTION

La présente invention concerne le domaine des dispositifs permettant l'identification d'un utilisateur et comprenant un microcircuit stockant des informations concernant l'utilisateur.

### ETAT DE LA TECHNIQUE

Ces dispositifs d'identification peuvent par exemple être des documents d'identification ou un terminal mobile. Les microcircuits sont également connus sous l'expression de circuit intégré ou puce électronique, et sont des composants électroniques, basés sur un semi-conducteur, reproduisant une, ou plusieurs, fonction(s) électronique(s) plus ou moins complexe(s), intégrant souvent plusieurs types de composants électroniques de base dans un volume réduit (sur une petite plaque), rendant le circuit facile à mettre en oeuvre.

En particulier, le document US 2014/263624 décrit un dispositif d'identification d'un utilisateur conforme au préambule de la revendication 1.

Les documents d'identification d'un utilisateur, aussi connus sous le nom de documents d'identité ou papiers d'identité sont par exemple des passeports, des cartes d'identité, des permis de conduire ou tout autres documents délivrés par une autorité officielle et permettant à l'utilisateur de justifier de son identité et de différents droits alloués à l'utilisateur. Ces documents d'identification sont généralement imprimés sur un morceau de matériau par exemple du plastique ou du papier recouvert d'une couche de plastique (document plastifié). Ces documents peuvent aussi prendre la forme d'un livret comprenant une pluralité de feuilles ou feuillets.

Le contenu imprimé sur ces documents est généralement figé au moment de la création du document d'identification.

Certains de ces documents d'identification se présentent sous la forme d'une carte et comprennent un microcircuit comprenant des informations sur l'utilisateur. Généralement l'accès aux informations est réalisé via un procédé de communication sans contact par exemple utilisant la technologie communication en champ proche ou NFC (en anglais, Near Field Communication).

Lorsque le document sécurisé doit être contrôlé par exemple pour en vérifier la validité, les données stockées sont lues à distance par un dispositif de lecture approprié, encore appelé lecteur, au moyen d'un couplage électromagnétique entre le microcircuit du document d'identification et le lecteur par exemple par la technologie NFC.

Cependant, il est important d'assurer au propriétaire que les données de son document d'identification ne peuvent pas être lues à son insu, c'est-à-dire sans son autorisation. Il est nécessaire en particulier de pouvoir éviter des lectures non autorisées à l'aide d'un lecteur extérieur, même lorsque le document est placé dans la poche de l'utilisateur. Une telle lecture est appelée « skimming » en terminologie anglo-saxonne.

Pour éviter une telle lecture non autorisée, l'accès aux informations concernant l'utilisateur est généralement protégé par l'utilisation d'un code de sécurité. Ce code de sécurité est par exemple inscrit sur le document d'identification, par exemple dans une zone appelée zone lecteur machine ou MRZ Machine Readable Zone en terminologie anglaise. Ainsi un dispositif de lecture souhaitant accéder aux informations stockées dans le microcircuit va dans une première étape lire le code de sécurité de la zone MRZ et le transmettre au microcircuit. Le microcircuit va alors comparer ce code transmis avec une copie de ce code de sécurité stocké dans sa mémoire, et si les deux codes correspondent va autoriser l'accès aux informations.

Ce code de sécurité est statique ce qui va provoquer différents problèmes de confidentialité, en particulier car il est possible de rejouer plusieurs fois la transmission du code de sécurité et ainsi accéder plusieurs fois aux données de la carte sans le consentement de l'utilisateur du document d'identification.

En outre, comme de plus en plus de copies de documents d'identification sont échangées, il y a des fuites de ces copies de documents d'identification. Ainsi nous pouvons considérer que ces informations imprimées sur le document n'ont pas assez de diversité ou d'entropie pour sécuriser l'accès au microcircuit de ces documents d'identification.

Un dispositif d'identification peut aussi être un terminal mobile de type téléphone mobile ou téléphone intelligent (également connu sous l'expression smartphone en anglais). Dans ce cas les éléments ne sont pas imprimés mais affichés sur l'écran du terminal mobile.

### EXPOSE DE L'INVENTION

L'invention répond à ce besoin.

A cet effet, l'invention concerne, selon un premier aspect, un dispositif d'identification d'un utilisateur, comprenant un microcircuit configuré pour stocker des informations concernant un utilisateur et un dispositif d'affichage, tel qu'un écran. Le microcircuit est configuré pour mettre en oeuvre les étapes suivantes une étape de détermination d'un premier code de sécurité, une étape de commande au dispositif d'affichage de l'affichage du premier code de sécurité, une étape de réception d'un deuxième code de sécurité, et si le premier code de sécurité et le deuxième code de sécurité sont identiques une étape de transmission des informations concernant l'utilisateur.

Le dispositif, selon le premier aspect, permet donc d'éviter l'accès aux informations du microcircuit en utilisant informations statiques imprimées sur celui-ci. En effet, le code de sécurité est variable dans le temps. Ainsi il n'est possible d'accéder aux informations du microcircuit que dans le cas où il est possible préalablement de lire le code de sécurité affiché sur le dispositif. Il n'est particulier pas possible d'accéder aux informations du microcircuit dans le cas où le dispositif ne serait pas visible par exemple s'il est rangé dans la poche de l'utilisateur.

Dans un mode de réalisation le dispositif d'identification d'un utilisateur selon la revendication 1, dans lequel le microcircuit comprend une mémoire apte au stockage des informations un dispositif d'autorisation de l'accès à cette mémoire et un dispositif de communication. Le dispositif d'autorisation est configuré pour mettre en oeuvre les étapes suivantes l'étape de détermination du premier code de sécurité et l'étape de commande au dispositif d'affichage de l'affichage du premier code de sécurité. Le dispositif de communication est configuré pour mettre en oeuvre les étapes suivantes l'étape de réception du deuxième code de sécurité et l'étape de transmission des informations concernant l'utilisateur.

Dans un mode de réalisation le microcircuit est configuré pour commander périodiquement au dispositif d'affichage la modification du premier code de sécurité qu'il affiche.

Dans un mode de réalisation le dispositif d'identification d'un utilisateur comprend une alimentation électrique par exemple une batterie ou une alimentation externe.

Dans un mode de réalisation le dispositif d'identification est un document d'identification par exemple un passeport ou une carte d'identité.

Dans un mode de réalisation le dispositif d'identification est un terminal mobile par exemple un téléphone portable ou un téléphone intelligent.

Selon un autre aspect un dispositif de lecture est proposé. Ce dispositif comprend un dispositif d'acquisition d'images, apte à acquérir au moins une image d'une zone d'un dispositif d'identification stockant des informations concernant un utilisateur, un module de communication apte à communiquer avec le dispositif d'identification, une unité de traitement configurée pour mettre en oeuvre les étapes suivantes ; une étape de transmission, via le module de communication, d'une requête de transmission des informations concernant l'utilisateur et stockées dans le dispositif d'identification, une étape d'acquisition, via le dispositif d'acquisition d'images, d'au moins une image du dispositif d'identification, une étape de détermination d'un code de sécurité à partir de l'image, une étape de transmission, via le module de communication, du code de sécurité déterminé au dispositif d'identification et une étape de réception, via le module de communication, des informations contenues dans le dispositif d'identification.

Selon un autre aspect un procédé, mis en oeuvre par le dispositif d'identification d'un utilisateur, de transmission d'informations concernant l'utilisateur et stockées dans le dispositif d'identification est proposé. Ce procédé de transmission comprend une étape de détermination d'un premier code de sécurité, une étape d'affichage du premier code de sécurité, une étape de réception d'un deuxième code de sécurité et si le premier code de sécurité et le deuxième code de sécurité sont identiques une étape de transmission des informations concernant l'utilisateur.

Selon un autre aspect un procédé, mis en oeuvre par un dispositif de lecture, de réception d'informations concernant un utilisateur et stockées dans un dispositif d'identification d'un utilisateur est proposé. Ce procédé de réception comprend :
- une étape de transmission au dispositif d'identification d'une requête de transmission des informations,
- une étape d'acquisition d'au moins une image du dispositif d'identification,
- une étape de détermination d'un code de sécurité à partir de l'image,
- une étape de transmission, au dispositif d'identification, du code de sécurité déterminé et
- une étape de réception des informations concernant l'utilisateur.

Selon un autre aspect un produit programme d'ordinateur est proposé. Ce produit programme d'ordinateur comprend des instructions de code de programme pour l'exécution des étapes du procédé de transmission d'informations concernant un utilisateur lorsque ce procédé est exécuté par un processeur.

Selon un autre aspect un produit programme d'ordinateur est proposé. Ce produit programme d'ordinateur comprend des instructions de code de programme pour l'exécution des étapes du procédé de réception d'informations concernant un utilisateur lorsque ce procédé est exécuté par un processeur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique le dispositif d'identification mis en oeuvre dans l'invention.
La figure 2 illustre de façon schématique un procédé de transmission d'informations comprises dans le microcircuit du dispositif d'identification.
La figure 3 illustre d'une autre manière et de façon schématique le dispositif d'identification mis en oeuvre dans l'invention.
La figure 4 illustre d'une autre manière et de façon schématique le dispositif d'identification mis en oeuvre dans l'invention.
La figure 5 illustre de manière schématique un dispositif de lecture des informations comprises dans le microcircuit du document d'identification.
La figure 6 illustre de façon schématique un procédé de réception d'informations contenues dans le microcircuit d'un document d'identification.

### DESCRIPTION DETAILLEE DE L'INVENTION

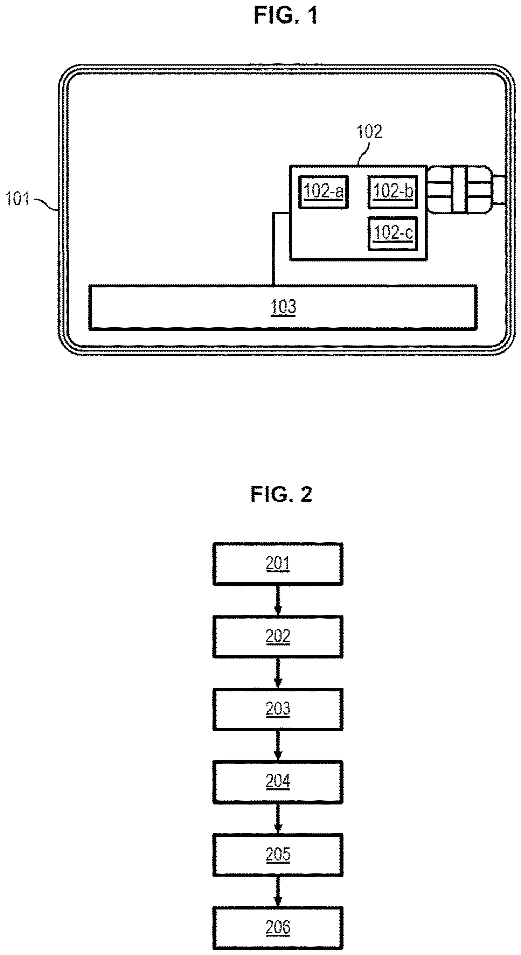

En référence à la figure 1 un dispositif d'identification 101 d'un utilisateur est proposé. Dans le cas de la figure 1 le dispositif d'identification 101 est un document d'identification, cependant ce mode de réalisation peut être mis en oeuvre sur d'autres types de dispositifs d'identification. Ce document d'identification 101 peut par exemple être une carte réalisée par exemple en PVC (Polychlorure de Vinyle) ou en polycarbonate. Le document peut aussi avoir la forme d'un livret, la couverture généralement la quatrième de couverture va être réalisée dans un matériau plus rigide que le papier par exemple en PVC (Polychlorure de vinyle) ou en polycarbonate. Des éléments d'identification de l'utilisateur sont imprimés sur le document d'identification.

Ce document d'identification 101 est par exemple une carte d'identité ou passeport. Cette carte d'identité ou ce passeport peuvent suivre les spécifications définies par l'Organisation de l'aviation civile internationale OACI ou International Civil Aviation Organization, ICAO en anglais. La taille de cette carte d'identité ou ce passeport est généralement l'une des tailles standards définies par une spécification et qui dépend du matériau utilisé pour réaliser cette carte d'identité ou ce passeport.

Le document d'identification 101 comprend un microcircuit 102 et un dispositif d'affichage 103.

Ce dispositif d'affichage 103 est configuré par l'affichage d'un code de sécurité.

Le microcircuit 102 comprend :
- Une mémoire 102-a pour le stockage des informations concernant l'utilisateur
- Un dispositif 102-b d'autorisation de l'accès à cette mémoire
- Un dispositif 102-c de communication avec un dispositif de lecture

De plus le microcircuit 102 est relié au dispositif d'affichage 103.

Le dispositif d'identification 101 peut aussi être un terminal mobile de type téléphone mobile ou téléphone intelligent. L'écran du terminal mobile est alors utilisé pour afficher les éléments d'identification de l'utilisateur et la mémoire du terminal mobile sera utilisée pour stocker les informations concernant l'utilisateur.

Le dispositif 102-b d'autorisation est configuré pour déterminer un premier code de sécurité et pour commander au dispositif d'affichage 103 l'affichage de ce premier code de sécurité.

Le dispositif 102-b d'autorisation est également configuré pour recevoir via le dispositif de communication 102-c l'indication d'un second code de sécurité en provenance d'un dispositif de lecture.

Le dispositif 102-b d'autorisation est enfin configuré pour autoriser l'accès aux informations par le dispositif de lecture et transmettre ces informations si le second code de sécurité est identique au premier code de sécurité.

Le dispositif 102-b d'autorisation comprend au moins un processeur et au moins une mémoire dans laquelle est stockée un programme d'ordinateur mis en oeuvre par le processeur. Ce programme d'ordinateur comprend des instructions de code de programme configurées pour mettre en oeuvre un procédé de transmission d'informations contenues dans le microcircuit du document d'identification qui sera décrit ci-après en relation avec la figure 2.

Ainsi donc le microcircuit 102 est configuré pour la mise en oeuvre d'un procédé de transmission d'informations comprises dans la mémoire 102-a du microcircuit 102 du document d'identification 101. En particulier le processeur du dispositif 102-b d'autorisation est configuré pour réaliser ce procédé. Le procédé est représenté figure 2 et comprend :
- une étape 201 de réception, par le dispositif de communication 102-c, d'une requête de transmission des informations comprises dans la mémoire 102-a du microcircuit 102 du document d'identification 101,
- une étape 202 de détermination d'un premier code de sécurité,
- une étape 203 de commande au dispositif d'affichage 103 de l'affichage du premier code de sécurité,
- une étape 204 de réception, par le dispositif de communication 102-c d'un deuxième code de sécurité,
- une étape 205 de comparaison du premier et du deuxième code de sécurité
- et si le premier code de sécurité et le deuxième code de sécurité sont identiques un étape 206 de transmission des informations comprises dans la mémoire 102-a le microcircuit 102 du document d'identification 101. Cette transmission est réalisée par le dispositif de communication 102-c.

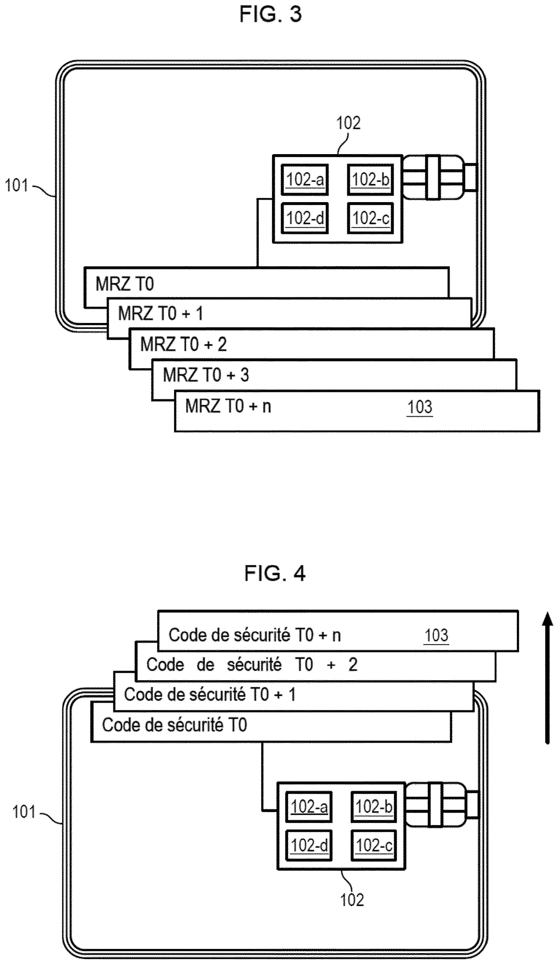

Le microcontrôleur 102 peut aussi comprendre un compteur temporel 102-d qui permet au dispositif 102-b d'autorisation de modifier de manière périodique le code de sécurité affiché sur le dispositif d'affichage 103. Une périodicité de quelques minutes permet d'obtenir une protection optimale des informations stockées du document d'identification 101. La figure 3 présente un tel mode de réalisation dans lequel l'affichage est modifié de manière périodique. La figure 4 représente d'une périodicité représentée graphiquement pour exprimer la modification temporelle de l'affichage.

Le dispositif d'identification 101 peut également comprend une alimentation électrique. Cette alimentation peut être une batterie intégrée dans le microcircuit 102 ou une alimentation externe. Cette alimentation permet en particulier d'alimenter en électricité le microcircuit 102 et le dispositif d'affichage 103.

Le dispositif d'affichage 103 est par exemple un écran permettant d'afficher différents formats tels que des QR Code ou du texte. Cet écran peut par exemple utiliser des cristaux liquides ou de l'encre électronique. Ce dispositif d'affichage 103 peut constituer ou faire partie d'une zone lisible par machine. Ce code de sécurité peut par exemple être intégré dans d'autres informations, comme le numéro de document, le nom, le prénom, la date de naissance, de l'utilisateur. Cet ensemble comprenant le code de sécurité, le numéro de document, le nom, le prénom, la date de naissance, de l'utilisateur, sera affiché dans une zone du document lisible par machine.

Les QR codes permettent de stocker et d'afficher tout type de données encodées (telles que numériques, alphanumériques, octets / binaires).

Le code de sécurité peut par exemple être un mot de passe à usage unique. Il peut être généré en fonction du temps ou d'un événement (par exemple si un bouton est pressé) afin de générer un code de sécurité unique qui peut être vérifié par le microcircuit pour autoriser l'accès aux informations.

Ce code de sécurité peut être concaténé à l'indication de l'instant temporel de génération du code de sécurité.

Le code de sécurité ainsi que l'instant temporel de génération peuvent être signés à l'aide d'une clé privée. Cette clé privée peut-être reliée au microcircuit dans ce cas elle ne sert que pour la signature de ces éléments. Cette clé privée peut aussi être reliée à l'utilisateur, dans ce cas elle peut servir de certificat permettant à l'utilisateur de signer des données qu'il enverrait en utilisant son document d'identification. Cette signature permet de garantir de manière unique l'authenticité des données et ainsi détecter une modification de ces données.

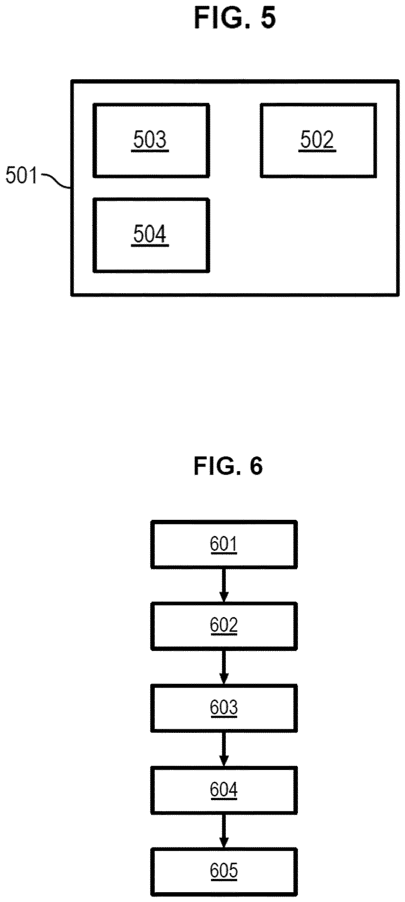

Pour accéder aux informations comprises dans le document d'identification, un dispositif de lecture 501 tel que représenté figure 5 est utilisé. Ce dispositif de lecture 501 comprend :
- un dispositif 502 d'acquisition d'images, apte à acquérir des images de la zone du document d'identification 101 comprenant le dispositif d'affichage 103.
- Un module de communication 503 apte à communiquer avec le microcircuit du document d'identification 101. Ce module de communication 503 est en particulier apte à envoyer au microcircuit une demande d'accès aux informations contenues dans ce dernier, une indication du code de sécurité affiché par le dispositif d'affichage 103 du document d'identification 101. Ce module de communication 503 est apte à recevoir les informations concernant l'utilisateur et stockées dans le microcircuit du document d'identification.
- Une unité de traitement 504. L'unité de traitement 504 comprend au moins un processeur et au moins une mémoire dans laquelle est stockée un programme d'ordinateur mis en oeuvre par le processeur. Ce programme d'ordinateur comprend des instructions de code de programme configurées pour mettre en oeuvre un procédé de réception d'informations contenues dans le microcircuit d'un document d'identification qui sera décrit ci-après en relation avec la figure 6.

Le procédé de réception d'informations contenues dans le microcircuit d'un document d'identification tel que décrit figure 6 comprend :
- Une étape 601 de transmission d'une requête de transmission des informations comprises dans le microcircuit 102 du document d'identification 101 et
- Une étape 602 d'acquisition d'une image du dispositif d'affichage 103 du document d'identification 101 et
- Une étape 603 de détermination du code de sécurité à partir de l'image et
- Une étape 604 de transmission du code de sécurité et
- Une étape 605 de réception des informations contenues dans le microcircuit 102 du document d'identification 101.

Ainsi donc pour sécuriser l'accès aux données de la puce, le dispositif de lecture 501 réalise une acquisition d'une image des informations affichées sur le document d'identification 101. Le dispositif de lecture doit déterminer le code de sécurité affiché sur le document d'identification et le transmettre au microcircuit 102 de ce document d'identification. Si le code de sécurité envoyé par le dispositif de lecture 501 est identique à celui que le microcircuit 102 en a commandé l'affichage au dispositif d'affichage, le microcircuit 102 va envoyer les informations au dispositif de lecture 501. Ce procédé permet d'avoir un code de sécurité avec une validité limitée et donc éviter l'accès aux informations du document d'identification 101 si celui-ci n'est pas lisible par le dispositif de lecture 501.

Dans le cas où la personne souhaitant accéder aux informations du document d'identification, ne peut pas prendre une image du document d'identification, elle ne pourra pas déterminer le code de sécurité affiché sur ce dernier. De plus comme ce code de sécurité varie dans le temps elle ne pourra pas deviner ce dernier. Ne pouvant pas avoir la connaissance du code de sécurité affiché par le document d'identification, elle ne pourra pas le communiquer au microcircuit et le microcircuit ne transmettre donc pas les informations concernant l'utilisateur. Ceci permet donc d'éviter des lectures non autorisées à l'aide d'un lecteur extérieur, appelées « skimming » en terminologie anglo-saxonne, lorsque le document est placé dans la poche de l'utilisateur.

## Revendications

1. Dispositif (101) d'identification d'un utilisateur, comprenant :
- un microcircuit (102) configuré pour stocker des informations concernant un utilisateur et
- un dispositif (103) d'affichage, tel qu'un écran;
- le microcircuit (102) étant configuré pour mettre en oeuvre les étapes suivantes :
• une étape (202) de détermination d'un premier code de sécurité,
• une étape (203) de commande au dispositif d'affichage (103) de l'affichage du premier code de sécurité,
**caractérisé en ce que** le microcircuit (102) est configuré pour mettre en oeuvre les étapes suivantes :
• une étape (204) de réception d'un deuxième code de sécurité,
• et si le premier code de sécurité et le deuxième code de sécurité sont identiques une étape (206) de transmission des informations concernant l'utilisateur.

2. Dispositif (101) d'identification d'un utilisateur selon la revendication 1, dans lequel le microcircuit (102) comprend :
- une mémoire (102-a) apte au stockage des informations
- un dispositif (102-b) d'autorisation de l'accès à cette mémoire et
- un dispositif (102-c) de communication ;
- le dispositif (102-b) d'autorisation étant configuré pour mettre en oeuvre les étapes suivantes :
• l'étape (202) de détermination du premier code de sécurité et
• l'étape (203) de commande au dispositif d'affichage (103) de l'affichage du premier code de sécurité ;
- le dispositif (102-c) de communication étant configuré pour mettre en oeuvre les étapes suivantes :
• l'étape (204) de réception du deuxième code de sécurité et
• l'étape (206) de transmission des informations concernant l'utilisateur.

3. Dispositif (101) d'identification d'un utilisateur selon la revendication 1 ou 2 dans lequel le microcircuit (102) est configuré pour commander périodiquement au dispositif (103) d'affichage la modification du premier code de sécurité qu'il affiche.

4. Dispositif (101) d'identification d'un utilisateur selon l'une des revendications 1 à 3, comprenant une alimentation électrique par exemple une batterie ou une alimentation externe.

5. Dispositif (101) d'identification d'un utilisateur selon l'une des revendications 1 à 4, étant un document d'identification par exemple un passeport ou une carte d'identité.

6. Dispositif (101) d'identification d'un utilisateur selon l'une des revendications 1 à 4, étant un terminal mobile par exemple un téléphone portable ou un téléphone intelligent.

7. Dispositif de lecture (501) comprenant :
- un dispositif (502) d'acquisition d'images, apte à acquérir au moins une image d'une zone d'un dispositif d'identification (101) stockant des informations concernant un utilisateur,
- un module de communication (503) apte à communiquer avec le dispositif d'identification (101),
- une unité de traitement (504) configurée pour mettre en oeuvre les étapes suivantes :
∘ une étape (601) de transmission, via le module de communication (503), d'une requête de transmission des informations concernant l'utilisateur et stockées dans le dispositif d'identification (101),
o une étape (602) d'acquisition, via le dispositif (502) d'acquisition d'images, d'au moins une image du dispositif d'identification (101),
o une étape (603) de détermination d'un code de sécurité à partir de l'image,
∘ une étape (604) de transmission, via le module de communication (503), du code de sécurité déterminé au dispositif d'identification (101) et
∘ une étape (605) de réception, via le module de communication (503), des informations contenues dans le dispositif d'identification (101).

8. Procédé, mis en oeuvre par le dispositif (101) d'identification d'un utilisateur selon l'une des revendications 1 à 6, de transmission d'informations concernant l'utilisateur et stockées dans le dispositif (101) d'identification, le procédé de transmission comprenant :
- une étape (202) de détermination d'un premier code de sécurité,
- une étape (203) d'affichage du premier code de sécurité,
- une étape (204) de réception d'un deuxième code de sécurité et
- si le premier code de sécurité et le deuxième code de sécurité sont identiques une étape (206) de transmission des informations concernant l'utilisateur.

9. Procédé, mis en oeuvre par un dispositif de lecture (501), de réception d'informations concernant un utilisateur et stockées dans un dispositif (101) d'identification d'un utilisateur selon l'une des revendications 1 à 6, le procédé de réception comprenant :
- une étape (601) de transmission au dispositif d'identification (101) d'une requête de transmission des informations,
- une étape (602) d'acquisition d'au moins une image du dispositif d'identification (101),
- une étape (603) de détermination d'un code de sécurité à partir de l'image,
- une étape (604) de transmission, au dispositif d'identification (101), du code de sécurité déterminé et
- une étape (605) de réception des informations concernant l'utilisateur.

10. Produit programme d'ordinateur comprenant des instructions de code de programme pour l'exécution des étapes d'un procédé de transmission d'informations concernant un utilisateur selon la revendication 8 lorsque ce procédé est exécuté par un processeur.

11. Produit programme d'ordinateur comprenant des instructions de code de programme pour l'exécution des étapes d'un procédé de réception d'informations concernant un utilisateur selon la revendication 9 lorsque ce procédé est exécuté par un processeur.

## Patentansprüche

1. Vorrichtung (101) zur Identifizierung eines Benutzers, die Folgendes beinhaltet:
- einen Mikroschaltkreis (102), der dazu konfiguriert ist, Informationen über einen Benutzer zu speichern, und
- eine Anzeigevorrichtung (103), wie etwa einen Bildschirm;
- wobei der Mikroschaltkreis (102) dazu konfiguriert ist, die folgenden Schritte zu implementieren:
• einen Schritt (202) des Bestimmens eines ersten Sicherheitscodes,
• einen Schritt (203) des Anweisens der Anzeigevorrichtung (103), den ersten Sicherheitscode anzuzeigen,
**dadurch gekennzeichnet, dass** der Mikroschaltkreis (102) dazu konfiguriert ist, die folgenden Schritte zu implementieren:
• einen Schritt (204) des Empfangens eines zweiten Sicherheitscodes,
• und wenn der erste Sicherheitscode und der zweite Sicherheitscode identisch sind, einen Schritt (206) des Übertragens der Informationen über den Benutzer.

2. Vorrichtung (101) zur Identifizierung eines Benutzers nach Anspruch 1, wobei der Mikroschaltkreis (102) Folgendes beinhaltet:
- einen Speicher (102-a), der zur Speicherung der Informationen geeignet ist,
- eine Vorrichtung (102-b) zur Autorisierung des Zugriffs auf diesen Speicher und
- eine Kommunikationsvorrichtung (102-c);
- wobei die Autorisierungsvorrichtung (102-b) dazu konfiguriert ist, die folgenden Schritte zu implementieren:
• den Schritt (202) des Bestimmens des ersten Sicherheitscodes und
• den Schritt (203) des Anweisens der Anzeigevorrichtung (103), den ersten Sicherheitscode anzuzeigen;
- wobei die Kommunikationsvorrichtung (102-c) dazu konfiguriert ist, die folgenden Schritte zu implementieren:
• den Schritt (204) des Empfangens des zweiten Sicherheitscodes und
• den Schritt (206) des Übertragens der Informationen über den Benutzer.

3. Vorrichtung (101) zur Identifizierung eines Benutzers nach Anspruch 1 oder 2, wobei der Mikroschaltkreis (102) dazu konfiguriert ist, die Anzeigevorrichtung (103) regelmäßig anzuweisen, den ersten Sicherheitscode, den sie anzeigt, zu ändern.

4. Vorrichtung (101) zur Identifizierung eines Benutzers nach einem der Ansprüche 1 bis 3, die eine Stromversorgung, beispielsweise eine Batterie oder eine externe Versorgung, beinhaltet.

5. Vorrichtung (101) zur Identifizierung eines Benutzers nach einem der Ansprüche 1 bis 4, die ein Identifizierungsdokument, beispielsweise ein Pass oder ein Personalausweis, ist.

6. Vorrichtung (101) zur Identifizierung eines Benutzers nach einem der Ansprüche 1 bis 4, die ein Mobilgerät, beispielsweise ein Handy oder ein intelligentes Telefon, ist.

7. Lesevorrichtung (501), die Folgendes beinhaltet:
- eine Vorrichtung (502) zur Erfassung von Bildern, die dazu geeignet ist, mindestens ein Bild eines Bereichs einer Identifizierungsvorrichtung (101), die Informationen über einen Benutzer speichert, zu erfassen,
- ein Kommunikationsmodul (503), das dazu geeignet ist, mit der Identifizierungsvorrichtung (101) zu kommunizieren,
- eine Verarbeitungseinheit (504), die dazu konfiguriert ist, die folgenden Schritte zu implementieren:
o einen Schritt (601) des Übertragens, mit Hilfe des Kommunikationsmoduls (503), einer Anforderung nach Übertragung der Informationen über den Benutzer, die in der Identifizierungsvorrichtung (101) gespeichert sind,
o einen Schritt (602) des Erfassens, mit Hilfe der Bilderfassungsvorrichtung (502), mindestens eines Bildes der Identifizierungsvorrichtung (101),
o einen Schritt (603) des Bestimmens eines Sicherheitscodes auf Basis des Bildes,
o einen Schritt (604) des Übertragens, mit Hilfe des Kommunikationsmoduls (503), des bestimmten Sicherheitscodes an die Identifizierungsvorrichtung (101) und
o einen Schritt (605) des Empfangens, mit Hilfe des Kommunikationsmoduls (503), der in der Identifizierungsvorrichtung (101) enthaltenen Informationen.

8. Verfahren, das durch die Vorrichtung (101) zur Identifizierung eines Benutzers nach einem der Ansprüche 1 bis 6 implementiert wird, zum Übertragen von Informationen über den Benutzer, die in der Identifizierungsvorrichtung (101) gespeichert sind, wobei das Übertragungsverfahren Folgendes beinhaltet:
- einen Schritt (202) des Bestimmens eines ersten Sicherheitscodes,
- einen Schritt (203) des Anzeigens des ersten Sicherheitscodes,
- einen Schritt (204) des Empfangens eines zweiten Sicherheitscodes und
- wenn der erste Sicherheitscode und der zweite Sicherheitscode identisch sind, einen Schritt (206) des Übertragens der Informationen über den Benutzer.

9. Verfahren, das durch eine Lesevorrichtung (501) implementiert wird, zum Empfangen von Informationen über einen Benutzer, die in einer Vorrichtung (101) zur Identifizierung eines Benutzers nach einem der Ansprüche 1 bis 6 gespeichert sind, wobei das Empfangsverfahren Folgendes beinhaltet:
- einen Schritt (601) des Übertragens, an die Identifizierungsvorrichtung (101), einer Anforderung nach Übertragung der Informationen,
- einen Schritt (602) des Erfassens mindestens eines Bildes der Identifizierungsvorrichtung (101),
- einen Schritt (603) des Bestimmens eines Sicherheitscodes auf Basis des Bildes,
- einen Schritt (604) des Übertragens, an die Identifizierungsvorrichtung (101), des bestimmten Sicherheitscodes und
- einen Schritt (605) des Empfangens der Informationen über den Benutzer.

10. Computerprogrammprodukt, das Programmcodeanweisungen zur Ausführung der Schritte eines Verfahrens zum Übertragen von Informationen über einen Benutzer nach Anspruch 8 beinhaltet, wenn dieses Verfahren durch einen Prozessor ausgeführt wird.

11. Computerprogrammprodukt, das Programmcodeanweisungen zur Ausführung der Schritte eines Verfahrens zum Empfangen von Informationen über einen Benutzer nach Anspruch 9 beinhaltet, wenn dieses Verfahren durch einen Prozessor ausgeführt wird.

## Claims

1. Device (101) for identifying a user, comprising:
- a microcircuit (102) configured to store information regarding a user and
- a display device (103), such as a screen;
- the microcircuit (102) being configured to implement the following steps:
• a step (202) of determining a first security code,
• a step (203) of commanding the display device (103) to display the first security code,
**characterized in that** the microcircuit (102) is configured to implement the following steps:
• a step (204) of receiving a second security code,
• and if the first security code and the second security code are identical a step (206) of transmitting the information regarding the user.

2. Device (101) for identifying a user according to Claim 1, wherein the microcircuit (102) comprises:
- a memory (102-a) able to store the information
- a device (102-b) for authorizing access to this memory and
- a communication device (102-c);
- the authorizing device (102-b) being configured to implement the following steps:
• the step (202) of determining the first security code and
• the step (203) of commanding the display device (103) to display the first security code;
- the communication device (102-c) being configured to implement the following steps:
• the step (204) of receiving the second security code and
• the step (206) of transmitting the information regarding the user.

3. Device (101) for identifying a user according to Claim 1 or 2, wherein the microcircuit (102) is configured to periodically command the display device (103) to modify the first security code that it displays.

4. Device (101) for identifying a user according to one of Claims 1 to 3, comprising an electrical power supply, for example a battery or an external power supply.

5. Device (101) for identifying a user according to one of Claims 1 to 4, being an identification document, for example a passport or an identity card.

6. Device (101) for identifying a user according to one of Claims 1 to 4, being a mobile terminal, for example a mobile telephone or a smartphone.

7. Reader device (501) comprising:
- an image-acquiring device (502) able to acquire at least one image of a region of an identifying device (101) storing information regarding a user,
- a communication module (503) able to communicate with the identifying device (101),
- a processing unit (504) configured to implement the following steps:
o a step (601) of transmitting, via the communication module (503), a request to transmit the information regarding the user stored in the identifying device (101),
o a step (602) of acquiring, via the image-acquiring device (502), at least one image of the identifying device (101),
o a step (603) of determining a security code based on the image,
o a step (604) of transmitting, via the communication module (503), the determined security code to the identifying device (101) and
o a step (605) of receiving, via the communication module (503), the information contained in the identifying device (101).

8. Method, implemented by the device (101) for identifying a user according to one of Claims 1 to 6, for transmitting information regarding the user stored in the identifying device (101), the transmitting method comprising:
- a step (202) of determining a first security code,
- a step (203) of displaying the first security code,
- a step (204) of receiving a second security code and
- if the first security code and the second security code are identical a step (206) of transmitting the information regarding the user.

9. Method, implemented by a reader device (501), for receiving information regarding a user stored in a device (101) for identifying a user according to one of Claims 1 to 6, the receiving method comprising:
- a step (601) of transmitting to the identifying device (101) a request to transmit information,
- a step (602) of acquiring at least one image of the identifying device (101),
- a step (603) of determining a security code based on the image,
- a step (604) of transmitting, to the identifying device (101), the determined security code and
- a step (605) of receiving the information regarding the user.

10. Computer program product comprising program-code instructions for executing the steps of a method for transmitting information regarding a user according to Claim 8 when this method is executed by a processor.

11. Computer program product comprising program-code instructions for executing the steps of a method for receiving information regarding a user according to Claim 9 when this method is executed by a processor.
